# FASCICULE DE BREVET EUROPEEN

(11) **EP 4 133 161 B1**
(45) Date de publication et mention de la délivrance du brevet: **23.07.2025**
(21) Numéro de dépôt: 21720812.3
(22) Date de dépôt: 29.03.2021
(51) Int. Cl.: F01D 5/30, F01D 5/28

(54) **ROTOR DE TURBINE POUR TURBOMACHINE ET PROCEDE DE MONTAGE DUDIT ROTOR**
TURBOMASCHINENTURBINENROTOR UND VERFAHREN ZUR MONTAGE DIESES ROTORS
TURBINE ROTOR FOR TURBOMACHINE AND ASSEMBLY METHOD FOR SAID ROTOR

(30) Priorité: 07.04.2020 FR 2003446
(43) Date de publication de la demande: 15.02.2023
(73) Titulaire: SAFRAN AIRCRAFT ENGINES, 75015 Paris (FR)
(72) Inventeur: ROSSET, Patrice Jean-Marc, 77550 MOISSY-CRAMAYEL (FR)
(74) Mandataire: Cabinet Camus Lebkiri
(86) Numéro de dépôt international: PCT/FR2021/050550
(87) Numéro de publication internationale: WO 2021/205094

(56) Documents cités:
- FR-A- 1 362 926
- US-A1- 2020 056 492

## Description

### DOMAINE TECHNIQUE DE L'INVENTION

L'invention se rapporte au domaine général des turbomachines.

L'invention concerne plus particulièrement un rotor de turbine, haute ou basse pression, ainsi qu'une turbomachine comprenant ledit rotor. L'invention se rapporte également à un procédé de montage dudit rotor.

### ARRIERE-PLAN TECHNOLOGIQUE DE L'INVENTION

Les turbomachines aéronautiques comprennent classiquement plusieurs modules tels qu'un compresseur basse pression, un compresseur haute pression, une chambre de combustion, une turbine haute pression suivie d'une turbine basse pression, qui entraînent le compresseur basse pression ou haute pression correspondant, et un système d'éjection des gaz. Chacune des turbines est formée d'un ou plusieurs étages, chaque étage comportant successivement une roue d'aubes fixes, appelée distributeur, et une roue d'aubes mobiles, appelée rotor.

Dans la présente demande, les termes « externe » et « interne », « supérieur » et « inférieur », « extérieur » et « intérieur » sont utilisés en référence à la position d'une pièce ou d'une surface par rapport à l'axe longitudinal de la turbomachine. En outre, les termes « radial » et « axial » correspondent respectivement à une direction axiale, parallèle à l'axe longitudinal de la turbomachine, et à une direction radiale, i.e. perpendiculaire à l'axe longitudinal de la turbomachine. En outre, les termes « amont » et « aval » sont utilisés en référence au sens d'écoulement du flux d'air dans la turbomachine, comme illustré sur les figures par une flèche.

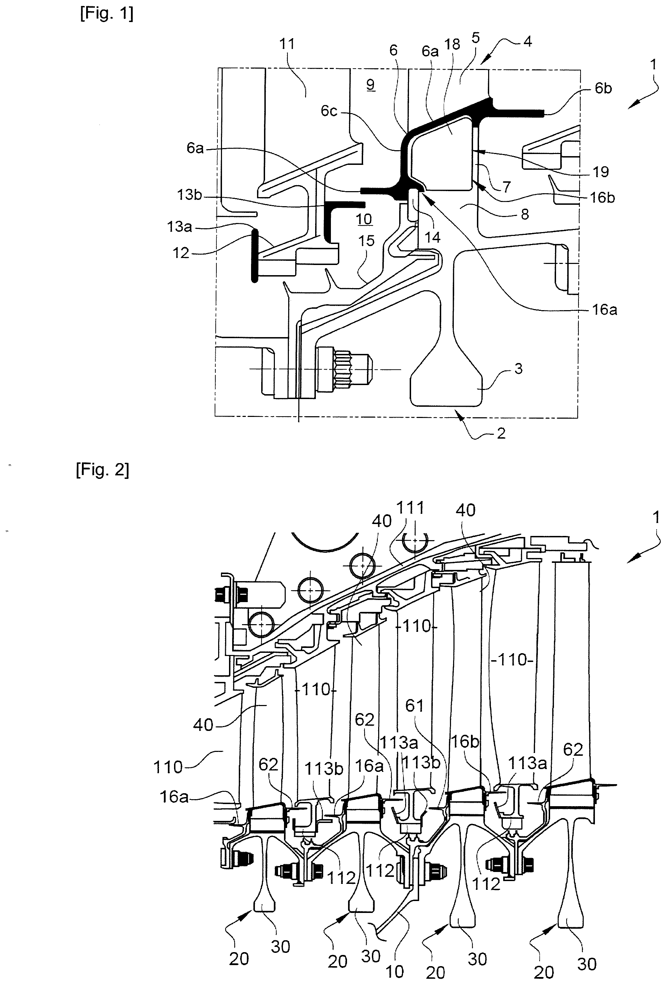

La figure 1 est une vue en coupe axiale d'une partie d'un rotor de turbine selon l'art antérieur, prise au niveau d'un des pieds d'aubes montés circonférenciellement autour d'un disque du rotor.

En référence à la figure 1, les aubes fixes 11 du distributeur sont réunies entre elles à leurs extrémités radialement internes par des secteurs annulaires placés circonférenciellement bout à bout de manière à former une virole interne 12 et sont montées à leurs extrémités radialement externes sur un carter (non représenté) de la turbine.

Par ailleurs, le rotor comprend un disque 3 comprenant, au niveau de sa périphérie externe, des dents délimitant des alvéoles dans lesquelles sont engagées les aubes mobiles 4 par leurs pieds 8 respectifs. Chaque aube mobile 4 comprend une pale 5 munie d'une plateforme 6 reliée à une échasse 7 qui est prolongée radialement par un pied 8. Les pieds 8 des aubes mobiles 4 sont retenus radialement dans les alvéoles du disque 3, par leur section bulbeuse, dite en queue d'aronde et axialement, par un jonc annulaire 14 en butée axiale contre la face amont des pieds 8 des aubes mobiles 4. Le jonc annulaire 14 est maintenu radialement dans des gorges amont 6c formées au niveau des faces internes des plateformes 6 et axialement par un flasque amont 15 annulaire fixé au disque 3.

Afin d'améliorer les performances de la turbomachine, et d'éviter l'échauffement du disque 3 par le flux des gaz chauds issus de la chambre de combustion amont et s'écoulant à travers la veine 9 d'écoulement de la turbine, il est important de limiter au maximum la circulation de ces gaz radialement de l'extérieur vers l'intérieur, i.e. de la veine 9 vers la zone 10 située entre les plateformes 6 des aubes mobiles 4 et le disque 3. En effet, la partie des gaz de veine 9 s'écoulant radialement sous les plateformes 6 ne participe pas à l'entrainement en rotation des aubes mobiles 40 et chauffe directement les dents du disque 3. De plus, le refroidissement du disque 3 et des pieds 8 des aubes mobiles 4 est assuré par des orifices (non illustrés) ménagés dans le flasque amont 15 qui assurent l'acheminement d'un flux d'air froid vers le fond des alvéoles du disque 3. Aussi, il est également nécessaire de limiter le passage du flux d'air froid radialement de l'intérieur vers l'extérieur.

Pour limiter la circulation des gaz entre la veine 9 et la zone 10 située entre les plateformes 6 des aubes mobiles 4 et le disque 3, il est connu de munir la plateforme 6 de chaque aube mobile 4 d'un becquet amont 6a et d'un becquet aval 6b qui définissent une chicane d'étanchéité, respectivement, avec un becquet aval 13b et un becquet amont 13a formés en saillie axiale sur les secteurs annulaires des viroles interne 12 situées, respectivement, en amont et en aval du rotor.

En outre, l'étanchéité entre les plateformes 6 est assurée par des tôles d'étanchéité 18, appelées également « bonbons », qui sont montées entre les aubes mobiles 4, dans des cavités latérales 19 ménagées dans les échasses 7 des aubes mobiles 4. En particulier, chaque tôle d'étanchéité 18 est montée entre deux aubes mobiles 4 circonférenciellement adjacentes et comprend une partie d'extrémité circonférentielle logée dans la cavité latérale 19 d'une aube mobile 4 et une partie d'extrémité circonférentielle opposée logée dans la cavité latérale 19 de l'aube mobile 4 adjacente. Ces tôles d'étanchéité 18 épousent avec de faibles jeux la forme interne des cavités latérales 19. En fonctionnement, ces tôles d'étanchéité 18 sont soumises aux forces centrifuges et sont plaquées radialement sur les faces internes des parois principales des plateformes 6, empêchant ainsi le passage radial de gaz chauds de la veine vers la zone 10 située radialement sous les plateformes.

De plus, chaque aube mobile 4 comporte un muret amont 16a et un muret aval 16b s'étendant radialement entre le pied 8 et la plateforme 6 de chaque aube mobile 4 qui englobent et limitent le contournement du flux de gaz s'écoulant dans la veine 9. En outre, les murets amont 16a et aval 16b permettent de limiter les fuites de gaz provenant de la veine 9 et voulant contourner l'aube mobile 4 en passant par le pied 6 de l'aube mobile 4.

Par ailleurs, en plus d'assurer l'étanchéité dans la turbine, la diminution de la masse des éléments constitutifs de la turbomachine est une préoccupation constante qui a conduit au développement d'aubes dont les pales sont réalisées en matériau composite à matrice céramique, appelé C.M.C.

Si l'utilisation de matériau C.M.C. permet de réduire le poids des aubes et d'augmenter leur résistance aux températures élevées, elle nécessite également de revoir la géométrie des aubes mobiles 4 en raison des contraintes d'obtention du procédé de fabrication de pièces en C.M.C. En effet, il s'avère compliqué de réaliser une aube mobile munie d'une plateforme qui présente une structure similaire à celle décrite précédemment car une telle structure génère notamment des problèmes de torsion des fibres du matériau lors de sa fabrication. Bien entendu, ce problème de simplification de la structure des plateformes peut également se poser avec d'autres types

Autre rotors de turbine sont connus de US 2020/0056492 A1 ou de FR 1362926 A.

### RESUME DE L'INVENTION

L'invention offre une solution aux problèmes évoqués précédemment, en proposant un rotor de turbine comportant des aubes, par exemple en C.M.C., dont la structure est simplifiée et l'étanchéité est assurée.

Un premier aspect de l'invention concerne un rotor de turbine selon la revendication 1, le rotor de turbine s'étendant autour d'un axe et comprenant :
- un disque centré sur l'axe du rotor et comportant des alvéoles et des dents ménagées dans une périphérie externe du disque, les alvéoles étant réparties circonférenciellement autour du disque et les dents étant chacune délimitée par deux alvéoles circonférenciellement adjacentes,
- une pluralité d'aubes, chaque aube comprenant :
   - une pale qui s'étend radialement vis-à-vis de l'axe du rotor,
   - un pied ménagé dans le prolongement radial de la pale, configuré pour être monté dans une alvéole respective du disque,
   - une plateforme située entre la pale et le pied de l'aube,
dans lequel, le disque comprend des moyens de rétention axiale configurés pour maintenir axialement les pieds des aubes dans les alvéoles du disque, les moyens de rétention axiale comportant une première série et une deuxième série de lamelles circonférenciellement réparties autour de l'axe, la première série et la deuxième série de lamelles étant superposées axialement et agencées de sorte que :
- au moins deux lamelles circonférenciellement adjacentes de la première série soient superposées axialement à une lamelle de la deuxième série et décalées circonférenciellement,
- chaque lamelle des première et deuxième séries soit disposée en regard d'une alvéole du disque de sorte à bloquer axialement le pied d'une aube monté dans ladite alvéole du disque.

En remplaçant le jonc annulaire par la première série et la deuxième série de lamelles, la rétention axiale des aubes est assurée mais également l'étanchéité entre les aubes grâce au chevauchement des lamelles de la première série avec les lamelles de la deuxième série ce qui permet de supprimer les murets amont et aval. La suppression des murets amont et aval permet de réduire la hauteur de l'échasse et donc de diminuer la masse de l'aube.

En outre, du fait de la superposition axiale des lamelles de la première série et de la deuxième série, de tels moyens de rétention axiale sont mécaniquement plus résistants que le jonc annulaire, aux contraintes exercées par les gaz chauds pendant le fonctionnement du rotor.

Par ailleurs, le remplacement du jonc annulaire par les lamelles des première et deuxième série permet de réduire les problèmes de dilatations différentielles entre les moyens de rétention axiale et les aubes pendant le fonctionnement du rotor. En effet, l'augmentation du volume totale de la pluralité de lamelles par dilatation thermique est inférieure à l'augmentation du volume total du jonc annulaire. Aussi, les lamelles sont moins susceptibles de contraindre les pièces adjacentes, i.e. lamelles adjacentes et les plateformes d'aubes, ce qui permet de limiter la déformation, voire la rupture de ces pièces pendant le fonctionnement du rotor.

De plus, les lamelles de petites dimensions sont plus faciles à monter et à démonter que le jonc annulaire. En outre, la maintenance du rotor est facilitée dans la mesure il suffit de remplacer uniquement la/les lamelle(s) dégradée(s) et non l'ensemble du jonc annulaire.

En outre, les lamelles sont plus faciles à fabriquer que le jonc annulaire notamment car il est plus facile de dimensionner les lamelles que le jonc annulaire.

Outre les caractéristiques qui viennent d'être évoquées dans le paragraphe précédent, le rotor de turbine selon le premier aspect de l'invention peut présenter une ou plusieurs caractéristiques complémentaires parmi les suivantes, considérées individuellement ou selon toutes les combinaisons techniquement possibles.

Selon un mode de réalisation non limitatif, chaque aube comporte une échasse située entre le pied et la plateforme de ladite aube et présentant une face amont et une face aval et en ce que les lamelles des première et deuxième séries présentent la forme générale d'un T, chacune desdites lamelles comportant :
- une portion radialement externe configurée pour venir en regard d'une face d'au moins deux échasses circonférenciellement adjacentes ou en regard d'au moins deux lamelles (101, 102, 103) circonférenciellement adjacentes,
- une portion radialement interne configurée pour venir en regard d'un pied d'une aube.

Selon un mode de réalisation non limitatif, la première série et la deuxième série de lamelles comportent des lamelles amont montées en amont du disque, les lamelles amont de la première série et de la deuxième série étant superposées axialement et agencées de sorte que :
- au moins deux lamelles amont circonférenciellement adjacentes de la première série soient superposées axialement à une lamelle amont de la deuxième série et,
- chaque lamelle amont des première et deuxième séries soit disposée en regard d'une alvéole du disque de sorte à bloquer axialement le pied d'une aube monté dans ladite alvéole du disque.

Selon un mode de réalisation non limitatif, les moyens de rétention axiale comportent un flasque amont annulaire fixé d'une part au disque et maintenant d'autre part les lamelles amont de la première série et de la deuxième série contre le disque.

Selon un mode de réalisation non limitatif, le flasque amont présente un bord amont prolongé axialement par un becquet amont annulaire. Ainsi, le becquet amont de la plateforme de l'aube mobile est transféré vers le flasque amont ce qui permet de simplifier la structure de la plateforme des aubes mobiles et donc faciliter sa fabrication ce qui est particulièrement intéressant lorsque les aubes sont réalisées dans un matériau à matrice céramique.

Selon un mode de réalisation non limitatif, la plateforme de chaque aube comporte une paroi principale présentant un rebord amont, chaque lamelle amont de la première série et de la deuxième série étant radialement en appui contre au moins une face interne d'un rebord amont.

Selon un mode de réalisation non limitatif, la première série et la deuxième série de lamelles comportent des lamelles aval montées en aval du disque, les lamelles aval de la première série et de la deuxième série étant superposées axialement et agencées de sorte que :
- au moins deux lamelles aval circonférenciellement adjacentes de la première série soient superposées axialement à une lamelle aval de la deuxième série et,
- chaque lamelle aval des première et deuxième séries soit disposée en regard d'une alvéole du disque de sorte à bloquer axialement le pied d'une aube monté dans ladite alvéole du disque.

Selon un mode de réalisation non limitatif, les moyens de rétention axiale comportent des moyens de maintien radialement interne et des moyens de maintien radialement externe configurés pour maintenir axialement et radialement les lamelles aval de la première et de la deuxième série en regard des alvéoles du disque.

Selon un mode de réalisation non limitatif, les moyens de maintien radialement interne sont formés par des crochets radiaux du disque, chaque crochet radial s'étendant radialement depuis une face aval d'une dent du disque et étant configuré pour recevoir une extrémité circonférentielle d'une portion radialement externe d'une lamelle aval.

Selon un mode de réalisation non limitatif, les moyens de maintien radialement externe sont formés par des gorges radiales formées dans les plateformes des aubes, chaque gorge radiale étant ménagée dans une face interne d'un rebord aval d'une plateforme et étant configurée pour recevoir la portion radialement externe d'une lamelle aval.

Selon un mode de réalisation non limitatif, les aubes et les lamelles sont réalisées dans des matériaux différents.

Selon un mode de réalisation non limitatif, les aubes sont réalisées à partir d'un matériau à matrice céramique.

Selon un mode de réalisation non limitatif, les lamelles sont réalisées à partir d'un matériau métallique.

Un troisième aspect de l'invention concerne un procédé de montage d'un rotor de turbine selon la revendication 11, le procédé de montage d'un rotor de turbine selon le premier aspect de l'invention comportant les étapes suivantes :
- Insérer les pieds des aubes dans les alvéoles du disque,
- Mettre en position la première série et la deuxième série de lamelles de sorte qu'au moins deux lamelles circonférenciellement adjacentes de la première série soient superposées axialement à une lamelle de la deuxième série et que chaque lamelle des première et deuxième séries soit disposée en regard d'une alvéole du disque de sorte à bloquer axialement le pied d'une aube monté dans ladite alvéole du disque.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] est vue en coupe axiale de la partie d'un rotor, selon l'art antérieur, prise au niveau d'un pied d'aube monté dans une alvéole du disque du rotor.
[Fig. 2] est une en coupe axiale partielle d'une turbine de turbomachine.
[Fig. 3] est une vue en coupe axiale de la partie d'un rotor, selon un mode de réalisation de l'invention, prise au niveau d'un pied d'aube monté dans une alvéole du disque du rotor.
[Fig. 4] est une vue en perspective, depuis l'aval de la turbine, du rotor représenté à la figure 3.
[Fig. 5] est une vue en perspective, depuis l'amont de la turbine, du rotor représenté à la figure 3.

### DESCRIPTION DETAILLEE

Sauf précision contraire, un même élément apparaissant sur des figures différentes présente une référence unique.

L'invention se rapporte à un rotor 20 de turbine 1 pour turbomachine.

On rappelle qu'une turbomachine comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

La figure 2 est une vue en coupe axiale partielle d'une turbine, haute ou basse pression, de la turbomachine.

En référence à la figure 2, la turbine 1 comprend plusieurs étages d'aubes, chaque étage comportant une roue d'aubes fixes 110, appelée distributeur, et une roue 20 d'aubes mobiles 40, appelée rotor.

Les roues d'aubes fixes 110 sont montées via leurs extrémités radialement externes sur un carter externe 111 de la turbine 1 et sont réunies entre elles à leurs extrémités radialement internes par des secteurs annulaires de virole interne 112 placés circonférenciellement bout à bout et portant des blocs de matériau abradable.

Les roues 20 d'aubes mobiles 40 sont assemblées axialement les unes aux autres par des brides annulaires et comportent chacune un disque 30 portant des aubes mobiles 40 individuelles. Le rotor 20 est relié à l'arbre de la turbine 1 par l'intermédiaire d'un cône d'entraînement 10.

En fonctionnement, les aubes fixes 110 du distributeur et les aubes mobiles 40 du rotor 20 sont exposées aux gaz chauds s'écoulant dans la veine de la turbine 1 qui sont issus de la chambre de combustion.

Dans la suite de la description, on utilisera le terme « aube » pour désigner une aube mobile de rotor.

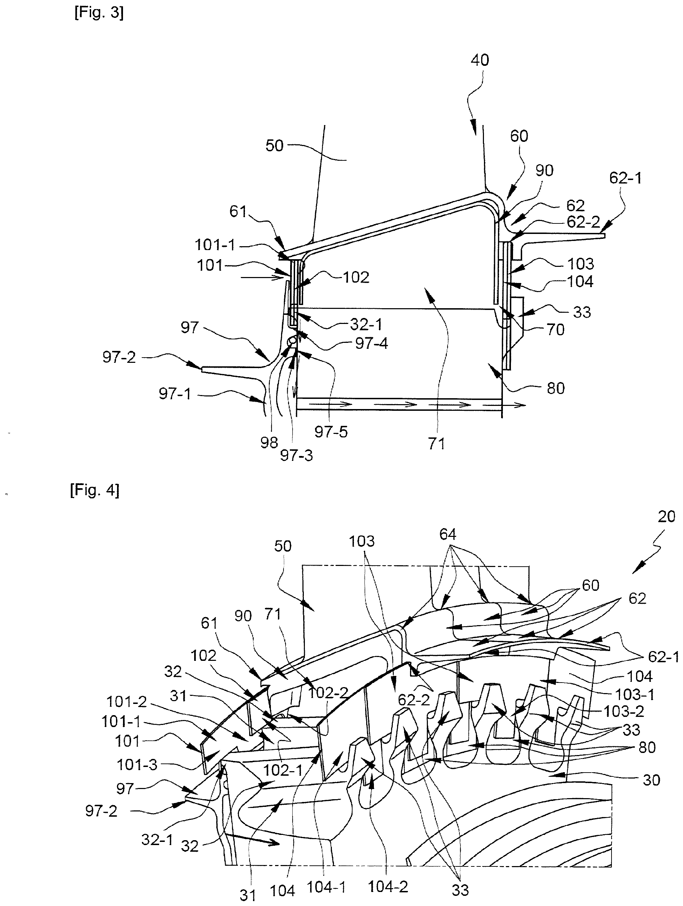

La figure 3 est une vue en coupe axiale de la partie du rotor 20, selon un mode de réalisation de l'invention, prise au niveau d'un pied d'aube monté dans une alvéole 31 du disque 30 du rotor 20 de la turbine 1.

En référence à la figure 3, chaque aube 40 comprend une pale 50 reliée par une plateforme 60 à une portion médiane ou échasse 70 qui est prolongée radialement par un pied 80.

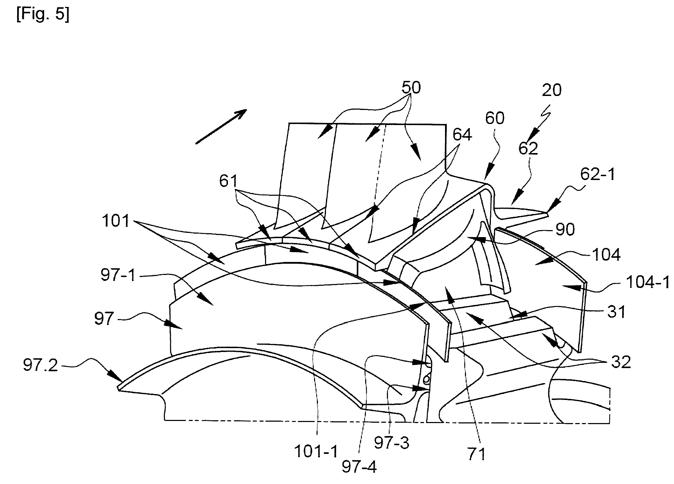

Comme on peut le voir sur les figures 4 et 5, les pieds 80 d'aubes 40 sont engagés dans des alvéoles 31 ménagées dans la périphérie externe du disque 30. Les alvéoles 31 sont régulièrement réparties autour de l'axe X de rotation du rotor 20 et délimitent entre elles des dents 32.

Par ailleurs, chaque plateforme 60 comporte une paroi principale délimitée par un rebord amont 61, un rebord aval 62 ainsi que par deux bords circonférentiels 64. Afin de limiter les fuites de gaz au niveau des jeux entre les bords circonférentiels 64 des plateformes 60, chaque aube 40 comprend deux cavités latérales 71 ménagées dans l'échasse 70, à l'intérieur desquelles sont positionnés des organes d'étanchéité 90 appelés « bonbons ». Chaque organe d'étanchéité 90 est monté entre deux aubes 40 circonférenciellement adjacentes et comprend une partie d'extrémité circonférentielle logée dans la cavité latérale 70 d'une aube 40 et une partie d'extrémité circonférentielle opposée logée dans la cavité latérale 71 d'une aube 40 circonférenciellement adjacente. Ces organes d'étanchéité 90 sont formés par une tôle qui épouse avec de faibles jeux la forme interne des cavités latérales 71. En fonctionnement, ces organes d'étanchéité 90 sont soumis aux forces centrifuges et sont plaqués radialement sur les faces internes des cavités latérales 71 de manière à empêcher le passage radial de gaz chauds de la veine vers la zone située entre la plateforme 60 et le disque 30. Ces organes d'étanchéité 90 assurent également un amortissement des vibrations auxquelles les aubes 40 sont soumises en fonctionnement.

Les pieds 80 d'aubes 40 sont retenus radialement dans les alvéoles 31, par leur section bulbeuse, dite en queue d'aronde. En outre, les pieds 80 d'aubes 40 sont retenus axialement dans les alvéoles 31 du disque 30 par des moyens de rétention axiale.

Les moyens de rétention axiale comportent des lamelles amont 101, 102 disposées en amont du disque 30 ainsi qu'un flasque amont 97 qui permet de maintenir lesdites lamelles amont 101, 102 contre le disque 30.

Le flasque amont 97 est fixé au disque 30 du rotor 20 et se présente sous la forme d'une pièce de révolution, dont l'axe de révolution est confondu avec l'axe de rotation X du rotor 20.

Le flasque amont 97 présente un bord amont 97-1 prolongé axialement par un becquet amont 97-2 annulaire qui définit une chicane d'étanchéité avec un becquet aval 113b, visible à la figure 2, ménagé dans les secteurs annulaires de la virole interne 112 située à l'amont du rotor 20. Le recouvrement du becquet amont 97-2 ménagé dans le flasque amont 97 et du becquet aval 113b ménagé dans la virole interne 112 permet de limiter le passage des gaz chauds, radialement de l'extérieur vers l'intérieur, i.e. de la veine annulaire d'écoulement du flux de gaz chaud vers la zone située entre la plateforme 60 des aubes 40 et le disque 30, et inversement d'un flux d'air froid radialement de l'intérieur vers l'extérieur. En outre, le rebord aval 62 de la paroi principale de la plateforme 60 est prolongé axialement par un becquet aval 62-1 qui définit une chicane d'étanchéité avec un becquet amont 113a, visible à la figure 2, ménagé dans les secteurs annulaires de la virole interne 112 située à l'aval du rotor 20.

Par ailleurs, le flasque amont 97 présente un bord aval 97-3 qui est axialement en appui contre le disque 30 et en regard de la face amont des pieds 80 des aubes 40. Avantageusement, le flasque amont 97 comporte des moyens d'étanchéité formés par un jonc torique 98 disposé, entre le flasque amont 97 et le disque 30, dans une gorge annulaire 97-5 ménagée dans une partie radialement interne du bord aval 97-3 du flasque amont 97.

Par ailleurs, afin de maintenir axialement et radialement les lamelles amont 101, 102 contre le disque 30, le flasque amont 97 comporte un épaulement annulaire 97-4 ménagé dans une partie radialement externe de son bord aval 97-3. Avantageusement, l'épaulement annulaire 97-4 forme une surface d'appui radial et une surface d'appui axial définissant un logement pour recevoir les lamelles amont 101, 102.

Les lamelles amont 101, 102 sont disposées en regard des alvéoles 31 du disque 30 de sorte à bloquer axialement les pieds 80 des aubes 40 dans lesdites alvéoles 31. De plus, chaque lamelle 101, 102 présente une extrémité radialement interne qui est radialement en appui contre la surface d'appui radial formée par l'épaulement annulaire 97-4 et une extrémité radialement externe qui est radialement en appui contre une face interne du rebord amont 61 d'une plateforme 60.

Les lamelles amont 101, 102 sont constituées par une première série et une deuxième série réparties circonférenciellement autour de l'axe X du rotor 20 et superposées axialement. En particulier, les lamelles amont 101 de la première série sont positionnées entre la surface d'appui axial, formée par l'épaulement annulaire 97-4 du flasque amont 97, et les faces amont des lamelles amont 102 de la deuxième série. Les lamelles amont 102 de la deuxième série sont positionnées entre les faces amont des échasses 70 et les faces aval des lamelles amont 101 de la première série. De plus, les lamelles amont 101, 102 des première et deuxième séries sont agencées de sorte qu'au moins deux lamelles amont 101 adjacentes de la première série sont superposées axialement à une lamelle amont 102 de la deuxième série. En d'autres termes, les lamelles amont 101 de la première série et les lamelles amont 102 de la deuxième série se chevauchent, i.e. sont décalées circonférenciellement, de manière à limiter les fuites de gaz via les interstices entre deux lamelles amont circonférenciellement adjacentes.

Avantageusement, les lamelles amont 101, 102 des première et deuxième séries présentent la forme générale d'un T.

La tête 101-1, ou portion radialement externe, des lamelles amont 101, 102 sont configurées pour venir en regard de la face amont d'au moins deux échasses 70 circonférenciellement adjacentes ou en regard de la face amont d'au moins deux lamelles amont 101, 102 circonférenciellement adjacentes. En particulier, la tête 101-1 des lamelles amont 101 de la première série est axialement en appui contre la face amont d'au moins deux lamelles amont 102 de la deuxième série circonférenciellement adjacentes. La tête 102-1 des lamelles amont 102 de la deuxième série est axialement en appui contre les faces amont d'au moins deux échasses 7 circonférenciellement adjacentes.

En outre, le pied 101-2, 102-2, ou portion radialement interne, des lamelles amont 101, 102 des première et deuxième séries sont en regard d'au moins un pied 50 d'une aube 40 monté dans une alvéole 31 du disque 30. De plus, les pieds 101-2, 102-2 des lamelles amont 101, 102 des première et deuxième séries forment un ergot permettant de bloquer en rotation lesdites lamelles amont 101, 102. En particulier, le pied 101-2, 102-1 des lamelle amont 101, 102 des première et deuxième séries est en butée circonférentielle contre un rebord amont 32-1 d'une dent 32 du disque 30.

Par ailleurs, les moyens de rétention axiale comportent des lamelles aval 103, 104 disposées en aval du disque 30 ainsi que des moyens de maintien radialement externes et internes permettant de maintenir radialement et axialement lesdites lamelles aval 103, 104 en regard des alvéoles 31 du disque 30.

Avantageusement, les moyens de maintien radialement externes sont formés par des gorges radiales 62-2 ménagées dans les faces internes des rebords aval 62 des plateformes 60. Ainsi, lorsque les plateformes 60 sont agencées circonférenciellement bout à bout, les gorges radiales 62-2 mises bout à bout forment une gorge radiale annulaire. Par ailleurs, les moyens de maintien radialement internes sont formés par des crochets radiaux 33 s'étendant radialement depuis la face aval de chaque dent 32 du disque 30. Ainsi, la tête 103-1, 104-1 de chaque lamelle aval 103, 104 est maintenue, au niveau de son extrémité radialement externe, par au moins une gorge radiale 62-2 et, au niveau de son extrémité radialement interne, par au moins deux crochets radiaux 33 adjacents.

Par ailleurs, de la même manière que les lamelles amont 101, 102, les lamelles aval 103, 104 sont disposées en regard des alvéoles 31 du disque 30 de sorte à bloquer axialement les pieds 80 des aubes 40 dans lesdites alvéoles 31. De plus, les lamelles aval 103, 104 sont constituées par une première série et une deuxième série réparties circonférenciellement autour de l'axe X du rotor 20. De plus, les lamelles aval 103 de la première série et les lamelles aval 104 de la deuxième série sont superposées axialement. En particulier, les lamelles aval 104 de la deuxième série sont positionnées entre les faces aval des échasses 70 des aubes 40 et les faces amont des lamelles aval 103 de la première série. De plus, les lamelles aval 103, 104 des première et deuxième séries sont agencées de sorte qu'au moins deux lamelles aval 103 circonférenciellement adjacentes de la première série soient superposées axialement à une lamelle aval 104 de la deuxième série. En d'autres termes, les lamelles aval 103 de la première série et les lamelles aval 104 de la deuxième série se chevauchent, i.e. sont décalées circonférenciellement, de manière à limiter les fuites de gaz via les interstices entre deux lamelles aval circonférenciellement adjacentes.

Avantageusement, les lamelles aval 103, 104 des première et deuxième séries présentent la forme générale d'un T.

La tête 103-1, ou portion radialement externe, des lamelles aval 103, 104 sont configurées pour venir en regard de la face aval d'au moins deux échasses 70 circonférenciellement adjacentes ou en regard de la face aval d'au moins deux lamelles aval 103, 104 circonférenciellement adjacentes. En particulier, la tête 103-1 de chaque lamelle aval 103 de la première série est axialement en appui contre les faces aval d'au moins deux lamelles aval 104 de la deuxième série tandis que la tête 104-1 de chaque lamelle aval 104 de la troisième série est axialement en appui contre les faces aval d'au moins deux échasses 7. Chaque tête 103-1, 104-1 des lamelles aval 103, 104 des première et deuxième séries est radialement en appui contre deux crochets radiaux 33 adjacents.

En outre, le pied 103-2, 104-2 des lamelles aval 103, 104 des première et deuxième séries est positionné entre deux crochets radiaux 33 adjacents, en regard d'un pied 80 d'aube 40. Ainsi, le pied 103-2, 104-2 de chacune desdites lamelles aval 103, 104 forme un ergot qui est en butée circonférentielle contre un crochet radial 33 du disque 30 de manière à bloquer en rotation ladite lamelle aval 103, 104.

De manière avantageuse, le flasque amont 15 et/ou les lamelles amont 101, 102 et/ou les lamelles aval 103, 104 comporte(nt) des orifices (non illustrés) qui assurent l'acheminement d'un flux d'air froid, illustré par des flèches, vers le fond des alvéoles du disque 3 de manière à assurer le refroidissement du disque 30 et les pieds 80 des aube mobiles 40.

Avantageusement, les aubes 40 et les lamelles amont et aval 101, 102, 103, 104 sont réalisées dans des matériaux différents. Ainsi, les aubes 40 sont par exemple réalisées en matériau composite à matrice céramique tandis que les lamelles amont et aval 101, 102, 103, 104 sont par exemple réalisées en matière métallique. Dans une variante de réalisation, les aubes 40 et les lamelles 101, 102, 103, 104 sont réalisées dans le même matériau, par exemple de type composite à matrice céramique.

L'invention concerne également un procédé de montage du rotor 20 décrit précédemment.

Dans une première étape, les organes d'étanchéité 90 sont positionnés dans les cavités latérales 71 ménagées dans les échasses 70 des aubes 40.

Dans une deuxième étape, les pieds 80 des aubes 40 sont partiellement insérés dans les alvéoles 31 du disque 30, de préférence sur la moitié de la largeur du disque 30.

Dans une troisième étape, les lamelles aval 103, 104 de la première et de la deuxième séries sont positionnées à l'intérieur des crochets radiaux 33. En particulier, les lamelles aval 103, 104 sont agencées de sorte que la tête 103-1, 104-1 desdites lamelles aval 103, 104 soit maintenue par deux crochets radiaux 33 adjacents et que leur pied 103-2, 104-2 soit positionné entre ces deux crochets radiaux 33. De plus, les lamelles aval 103, 104 des première et deuxième séries sont superposées axialement de sorte qu'au moins deux lamelles aval 103 circonférenciellement adjacentes de la première série soient superposées axialement à une lamelle aval 104 de la deuxième série.

Dans une quatrième étape, les lamelles aval 103, 104 des première et deuxième séries sont placées en biais dans les crochets radiaux 33 de manière à rapprocher les extrémités radialement externes desdites lamelles 103, 104 vers le rebord aval 62 des plateformes 60 des aubes 40.

Dans une cinquième étape, les pieds 80 d'aubes 40 sont insérés en totalité dans les alvéoles 31 du disque 30 et les extrémités radialement externes des lamelles aval 103, 104 des première et deuxième séries sont positionnées à l'intérieur des gorges radiales 62-1 ménagées dans les rebords aval 62 des plateformes 60 des aubes 40.

Dans une sixième étape, les lamelles amont 101, 102 des première et des deuxième séries sont placées dans le logement formé par l'épaulement annulaire 94-4 du flasque amont 97. En particulier, les lamelles amont 101, 102 des première et deuxième séries sont agencées de sorte qu'au moins deux lamelles amont 101 circonférenciellement adjacentes de la première série soient superposées axialement à une lamelle amont 102 de la deuxième série. La tête 101-1 des lamelles amont 101 de la première série est alors axialement en appui contre les faces amont d'au moins deux lamelles amont 102 de la deuxième série tandis que la tête 102-1 des lamelles amont 102 de la deuxième série est axialement en appui contre les faces amont d'au moins deux échasses 7 circonférenciellement adjacentes. En outre, le pied 101-2, 102-2 des lamelles amont 101, 102 des première et deuxième séries est en butée circonférentielle contre un rebord amont 32-1 d'une dent 32 du disque 30.

Dans une septième étape, le flasque amont 97 est fixé sur une bride amont du disque 30 du rotor 20 de sorte que les extrémités radialement externes des lamelles amont 101, 102 des première et deuxième séries soient radialement en appui contre la face interne des rebords amont 61 des plateformes 60 et que les extrémités radialement internes des lamelles amont 101, 102 des première et deuxième séries soient radialement en appui contre la surface d'appui radial formée par l'épaulement annulaire 97-4 du flasque amont 97

Naturellement, l'invention n'est pas limitée aux différents modes de réalisation qui ont été décrits, et des variantes de réalisation sont possibles.

## Revendications

1. Rotor (20) de turbine (1) s'étendant autour d'un axe (X) et comprenant :
- un disque (30) centré sur l'axe (X) et comportant des alvéoles (31) et des dents (32) ménagées dans une périphérie externe du disque (30), les alvéoles (31) étant réparties circonférenciellement autour du disque (30) et les dents (32) étant chacune délimitée par deux alvéoles (31) circonférenciellement adjacentes,
- une pluralité d'aubes (40), chaque aube (40) comprenant :
∘ une pale (50) qui s'étend radialement vis-à-vis de l'axe (X),
∘ un pied (80) ménagé dans le prolongement radial de la pale (50), configuré pour être monté dans une alvéole (31) respective du disque (30),
∘ une plateforme (60) située entre la pale (50) et le pied (80) de l'aube (40),
∘ dans lequel le disque (30) comprend des moyens de rétention axiale configurés pour maintenir axialement les pieds (80) des aubes (40) dans les alvéoles (31) du disque (30),
dans lequel les moyens de rétention axiale comportent une première série et une deuxième série de lamelles (101, 102, 103, 104) circonférenciellement réparties autour de l'axe (X), la première série et la deuxième série de lamelles (101, 102) étant superposées axialement et agencées de sorte que :
- chaque lamelle (101, 102, 103, 104) des première et deuxième séries soit disposée en regard d'une alvéole (31) du disque (30) de sorte à bloquer axialement le pied (80) d'une aube (40) monté dans ladite alvéole (31) du disque (30),
le rotor (20) de turbine (1) étant **caractérisé en ce que** au moins deux lamelles (101, 103) circonférenciellement adjacentes de la première série soient superposées axialement à une lamelle (102, 104) de la deuxième série et décalées circonférenciellement.

2. Rotor (20) de turbine (1) selon la revendication précédente, **caractérisé en ce que** chaque aube (40) comporte une échasse (70) située entre le pied (80) et la plateforme (60) de ladite aube (40) et présentant une face amont et une face aval et **en ce que** les lamelles (101, 102, 103, 104) des première et deuxième séries présentent la forme générale d'un T, chacune desdites lamelles (101, 102, 103, 104) comportant :
- une portion radialement externe (101-3, 102-3, 103-1, 104-1) configurée pour venir en regard d'une face d'au moins deux échasses (70) circonférenciellement adjacentes ou en regard d'au moins deux lamelles (101, 102, 103, 104) circonférenciellement adjacentes,
- une portion radialement interne (101-4, 102-4, 103-2, 104-2) configurée pour venir en regard d'un pied (50) d'une aube (40).

3. Rotor (20) de turbine (1) selon l'une quelconque des revendications précédentes, **caractérisé en ce que** la première série et la deuxième série de lamelles (101, 102, 103, 104) comportent des lamelles amont (101, 102) montées en amont du disque (30), les lamelles amont (101, 102) de la première série et de la deuxième série étant superposées axialement et agencées de sorte que :
- au moins deux lamelles amont (101) circonférenciellement adjacentes de la première série soient superposées axialement à une lamelle amont (102) de la deuxième série et,
- chaque lamelle amont (101, 102) des première et deuxième séries soit disposée en regard d'une alvéole (31) du disque (30) de sorte à bloquer axialement le pied (80) d'une aube (40) monté dans ladite alvéole (31) du disque (30),
les moyens de rétention axiale comportant un flasque amont (97) annulaire fixé d'une part au disque (30) et maintenant d'autre part les lamelles amont (101, 102) de la première série et de la deuxième série contre le disque (30).

4. Rotor (20) de turbine (1) selon la revendication précédente, **caractérisé en ce que** la plateforme (60) de chaque aube (40) comporte une paroi principale présentant un rebord amont (61), chaque lamelles amont (101, 102) de la première série et de la deuxième série étant radialement en appui contre au moins une face interne d'un rebord amont (61).

5. Rotor (20) de turbine (1) selon l'une quelconque des revendications précédentes, **caractérisé en ce que** la première série et la deuxième série de lamelles (101, 102, 103, 104) comportent des lamelles aval (103, 104) montées en aval du disque (30), les lamelles aval (103, 104) de la première série et de la deuxième série étant superposées axialement et agencées de sorte que :
- au moins deux lamelles aval (103) circonférenciellement adjacentes de la première série soient superposées axialement à une lamelle aval (104) de la deuxième série et,
- chaque lamelle aval (103, 104) des première et deuxième séries soit disposée en regard d'une alvéole (31) du disque (30) de sorte à bloquer axialement le pied (80) d'une aube (40) monté dans ladite alvéole (31) du disque (30).

6. Rotor (20) de turbine (1) selon la revendication précédente, **caractérisé en ce que** les moyens de rétention axiale comportent des moyens de maintien radialement interne et des moyens de maintien radialement externe configurés pour maintenir axialement et radialement les lamelles aval (103, 104) de la première et de la deuxième série en regard des alvéoles (31) du disque (30).

7. Rotor (20) de turbine (1) selon la revendication précédente, **caractérisé en ce que** les moyens de maintien radialement interne sont formés par des crochets radiaux (33) du disque (30), chaque crochet radial (33) s'étendant radialement depuis une face aval d'une dent (32) du disque (30) et étant configuré pour recevoir une extrémité circonférentielle d'une portion radialement externe (103-1, 104-1) d'une lamelle aval (103, 104).

8. Rotor (20) de turbine (1) selon l'une quelconque des revendications 6 à 7, **caractérisé en ce que** les moyens de maintien radialement externe sont formés par des gorges radiales (62-2) formées dans les plateformes (60) des aubes (40), chaque gorge radiale (62-2) étant ménagée dans une face interne d'un rebord aval (62) d'une plateforme (60) et étant configurée pour recevoir la portion radialement externe (103-1, 104-1) d'une lamelle aval (103, 104).

9. Rotor (20) de turbine (1) selon l'une quelconque des revendications précédentes, **caractérisé en ce que** les aubes (40) et les lamelles (101, 102, 103, 104) sont réalisées dans des matériaux différents.

10. Rotor (20) de turbine (1) selon la revendication précédente, **caractérisé en ce que** les aubes (40) sont réalisées à partir d'un matériau à matrice céramique et les lamelles (101, 102, 103, 104) sont réalisées à partir d'un matériau métallique.

11. Procédé de montage du rotor (20) de turbine (1) selon l'une quelconque des revendications précédentes, **caractérisé en ce qu'**il comporte les étapes suivantes :
- Insérer les pieds (80) des aubes (40) dans les alvéoles (31) du disque (30),
- Mettre en position la première série et la deuxième série de lamelles (101, 102, 103, 104) de sorte qu'au moins deux lamelles (101, 103) circonférenciellement adjacentes de la première série soient superposées axialement à une lamelle (102, 104) de la deuxième série et que chaque lamelle (101, 102, 103, 104) des première et deuxième séries soit disposée en regard d'une alvéole (31) du disque (30) de sorte à bloquer axialement le pied (80) d'une aube (40) monté dans ladite alvéole (31) du disque (30).

## Patentansprüche

1. Rotor (20) für eine Turbine (1), der sich um eine Achse (X) erstreckt und umfasst:
- eine Scheibe (30), die auf der Achse (X) zentriert ist und Kammern (31) und Zähne (32) aufweist, die in einem Außenumfang der Scheibe (30) ausgebildet sind, wobei die Kammern (31) in Umfangsrichtung um die Scheibe (30) herum verteilt sind und die Zähne (32) jeweils von zwei in Umfangsrichtung benachbarten Kammern (31) begrenzt werden,
- eine Vielzahl von Schaufeln (40), wobei jede Schaufel (40) umfasst:
∘ ein Blatt (50), das sich in Bezug auf die Achse (X) radial erstreckt,
∘ einen Fuß (80), der in der radialen Verlängerung des Blattes (50) ausgebildet ist und so gestaltet ist, dass er in einer entsprechenden Kammer (31) der Scheibe (30) montiert werden kann,
∘ eine Plattform (60), die sich zwischen dem Blatt (50) und dem Fuß (80) der Schaufel (40) befindet,
∘ wobei die Scheibe (30) axiale Haltemittel umfasst, die so gestaltet sind, dass sie die Füße (80) der Schaufeln (40) in den Kammern (31) der Scheibe (30) axial halten,
wobei die axialen Haltemittel eine erste Reihe und eine zweite Reihe von Lamellen (101, 102, 103, 104) umfassen, die in Umfangsrichtung um die Achse (X) verteilt sind, wobei die erste Reihe und die zweite Reihe von Lamellen (101, 102) axial übereinander liegen und so angeordnet sind, dass:
- jede Lamelle (101, 102, 103, 104) der ersten und zweiten Reihe gegenüber einer Kammer (31) der Scheibe (30) angeordnet ist, sodass sie den Fuß (80) einer Schaufel (40), der in der Kammer (31) der Scheibe (30) montiert ist, axial blockiert,
wobei der Rotor (20) der Turbine (1) **dadurch gekennzeichnet ist, dass** mindestens zwei in Umfangsrichtung benachbarte Lamellen (101, 103) der ersten Reihe axial über einer Lamelle (102, 104) der zweiten Reihe liegen und in Umfangsrichtung versetzt sind.

2. Rotor (20) für eine Turbine (1) nach dem vorhergehenden Anspruch, **dadurch gekennzeichnet, dass** jede Schaufel (40) eine Stelze (70) aufweist, die zwischen dem Fuß (80) und der Plattform (60) der Schaufel (40) angeordnet ist und eine stromaufwärtige Seite und eine stromabwärtige Seite aufweist, und dass die Lamellen (101, 102, 103, 104) der ersten und zweiten Reihe die allgemeine Form eines T aufweisen, wobei jede der Lamellen (101, 102, 103, 104) umfasst:
- einen radial äußeren Abschnitt (101-3, 102-3, 103-1, 104-1), der so gestaltet ist, dass er gegenüber einer Fläche von mindestens zwei in Umfangsrichtung benachbarten Stelzen (70) oder gegenüber mindestens zwei in Umfangsrichtung benachbarten Lamellen (101, 102, 103, 104) zu liegen kommt,
- einen radial inneren Abschnitt (101-4, 102-4, 103-2, 104-2), der so gestaltet ist, dass er einem Fuß (50) einer Schaufel (40) gegenübersteht.

3. Rotor (20) für eine Turbine (1) nach einem der vorhergehenden Ansprüche, **dadurch gekennzeichnet, dass** die erste Reihe und die zweite Reihe von Lamellen (101, 102, 103, 104) stromaufwärts gelegene Lamellen (101, 102) umfassen, die stromaufwärts der Scheibe (30) angebracht sind, wobei die stromaufwärts gelegenen Lamellen (101, 102) der ersten Reihe und der zweiten Reihe axial übereinander liegen und so angeordnet sind, dass:
- mindestens zwei in Umfangsrichtung benachbarte stromaufwärts gelegene Lamellen (101) der ersten Reihe axial über einer stromaufwärts gelegenen Lamelle (102) der zweiten Reihe liegen und,
- jede stromaufwärts gelegene Lamelle (101, 102) der ersten und zweiten Reihe gegenüber einer Kammer (31) der Scheibe (30) angeordnet ist, so dass sie den Fuß (80) einer Schaufel (40), der in der Kammer (31) der Scheibe (30) montiert ist, axial blockiert,
wobei die axialen Haltemittel einen ringförmigen stromaufwärtigen Flansch (97) umfassen, der einerseits an der Scheibe (30) befestigt ist und andererseits die stromaufwärtigen Lamellen (101, 102) der ersten Reihe und der zweiten Reihe gegen die Scheibe (30) hält.

4. Rotor (20) für eine Turbine (1) nach dem vorhergehenden Anspruch, **dadurch gekennzeichnet, dass** die Plattform (60) jeder Schaufel (40) eine Hauptwand mit einem stromaufwärts gelegenen Rand (61) umfasst, wobei jede stromaufwärts gelegene Lamelle (101, 102) der ersten Reihe und der zweiten Reihe radial gegen mindestens eine Innenfläche eines stromaufwärts gelegenen Randes (61) anliegt.

5. Rotor (20) für eine Turbine (1) nach einem der vorhergehenden Ansprüche, **dadurch gekennzeichnet, dass** die erste Reihe und die zweite Reihe von Lamellen (101, 102, 103, 104) stromabwärts gelegene Lamellen (103, 104) umfassen, die stromabwärts der Scheibe (30) angebracht sind, wobei die stromabwärts gelegenen Lamellen (103, 104) der ersten Reihe und der zweiten Reihe axial übereinander liegen und so angeordnet sind, dass:
- mindestens zwei in Umfangsrichtung benachbarte stromabwärts gelegene Lamellen (103) der ersten Reihe axial über einer stromabwärts gelegenen Lamelle (104) der zweiten Reihe liegen und,
- jede stromabwärts gelegene Lamelle (103, 104) der ersten und zweiten Reihe gegenüber einer Kammer (31) der Scheibe (30) angeordnet ist, so dass sie den Fuß (80) einer Schaufel (40), der in der Kammer (31) der Scheibe (30) montiert ist, axial blockiert.

6. Rotor (20) für eine Turbine (1) nach dem vorhergehenden Anspruch, **dadurch gekennzeichnet, dass** die axialen Haltemittel radial innere Haltemittel und radial äußere Haltemittel umfassen, die so gestaltet sind, dass sie die stromabwärtigen Lamellen (103, 104) der ersten und der zweiten Reihe axial und radial gegenüber den Kammern (31) der Scheibe (30) halten.

7. Rotor (20) für eine Turbine (1) nach dem vorhergehenden Anspruch, **dadurch gekennzeichnet, dass** die radial inneren Haltemittel durch radiale Haken (33) der Scheibe (30) gebildet werden, wobei sich jeder radiale Haken (33) radial von einer stromabwärtigen Seite eines Zahns (32) der Scheibe (30) erstreckt und so gestaltet ist, dass er ein Umfangsende eines radial äußeren Abschnitts (103-1, 104-1) einer stromabwärtigen Lamelle (103, 104) aufnimmt.

8. Rotor (20) für eine Turbine (1) nach einem der Ansprüche 6 bis 7, **dadurch gekennzeichnet, dass** die radial äußeren Haltemittel durch radiale Nuten (62-2) gebildet werden, die in den Plattformen (60) der Schaufeln (40) ausgebildet sind, wobei jede radiale Nut (62-2) in einer Innenseite eines stromabwärtigen Randes (62) einer Plattform (60) ausgebildet und so gestaltet ist, dass sie den radial äußeren Abschnitt (103-1, 104-1) einer stromabwärtigen Lamelle (103, 104) aufnimmt.

9. Rotor (20) für eine Turbine (1) nach einem der vorhergehenden Ansprüche, **dadurch gekennzeichnet, dass** die Schaufeln (40) und die Lamellen (101, 102, 103, 104) aus unterschiedlichen Materialien hergestellt sind.

10. Rotor (20) für eine Turbine (1) nach dem vorhergehenden Anspruch, **dadurch gekennzeichnet, dass** die Schaufeln (40) aus einem keramischen Matrixmaterial und die Lamellen (101, 102, 103, 104) aus einem metallischen Material hergestellt sind.

11. Verfahren zur Montage des Rotors (20) einer Turbine (1) nach einem der vorhergehenden Ansprüche, **dadurch gekennzeichnet, dass** es die folgenden Schritte umfasst:
- Einführen der Füße (80) der Schaufeln (40) in die Kammern (31) der Scheibe (30),
- Positionieren der ersten und der zweiten Reihe von Lamellen (101, 102, 103, 104), so dass mindestens zwei in Umfangsrichtung benachbarte Lamellen (101, 103) der ersten Reihe axial über einer Lamelle (102, 104) der zweiten Reihe angeordnet sind und dass jede Lamelle (101, 102, 103, 104) der ersten und zweiten Reihe gegenüber einer Kammer (31) der Scheibe (30) angeordnet ist, so dass sie den Fuß (80) einer Schaufel (40), der in der Kammer (31) der Scheibe (30) montiert ist, axial blockiert.

## Claims

1. A rotor (20) of a turbine (1) extending about an axis (X) and comprising:
- a disc (30) centred on the axis (X) and including slots (31) and teeth (32) provided in an outer periphery of the disc (30), the slots (31) being circumferentially distributed around the disc (30) and the teeth (32) each being delimited by two circumferentially adjacent slots (31),
- a plurality of vanes (40), each vane (40) comprising:
∘ a blade (50) which extends radially with respect to the axis (X)
∘ a root (80) formed in radial extension of the blade (50), configured to be mounted in a respective slot (31) of the disc (30),
∘ a platform (60) located between the blade (50) and the root (80) of the vane (40),
∘ wherein the disc (30) comprises axial retention means configured to axially hold the roots (80) of the vanes (40) in the slots (31) of the disc (30),
**characterised in that** the axial retention means include a first series and a second series of lamellae (101, 102, 103, 104) circumferentially distributed about the axis (X), the first series and the second series of lamellae (101, 102) being axially superimposed and arranged so that:
- at least two circumferentially adjacent lamellae (101, 103) of the first series are axially superimposed on a lamella (102, 104) of the second series and circumferentially offset,
- each lamella (101, 102, 103, 104) of the first and second series is disposed facing a slot (31) of the disc (30) so as to axially block the root (80) of a vane (40) mounted in said slot (31) of the disc (30).

2. The rotor (20) of a turbine (1) according to the preceding claim, **characterised in that** each vane (40) includes a stilt (70) located between the root (80) and the platform (60) of said vane (40) and having an upstream face and a downstream face, and **in that** the lamellae (101, 102, 103, 104) of the first and second series have the general shape of a T, each of said lamellae (101, 102, 103, 104) including:
- a radially outer portion (101-3, 102-3, 103-1, 104-1) configured to face one face of at least two circumferentially adjacent stilts (70) or to face at least two circumferentially adjacent lamellae (101, 102, 103, 104),
- a radially inner portion (101-4, 102-4, 103-2, 104-2) configured to face a root (50) of a vane (40).

3. The rotor (20) of a turbine (1) according to any of the preceding claims, **characterised in that** the first series and the second series of lamellae (101, 102, 103, 104) include upstream lamellae (101, 102) mounted upstream of the disc (30), the upstream lamellae (101, 102) of the first series and of the second series being axially superimposed and arranged such that:
- at least two circumferentially adjacent upstream lamellae (101) of the first series are axially superimposed on an upstream lamella (102) of the second series and,
- each upstream lamella (101, 102) of the first and second series is disposed facing a slot (31) of the disc (30) so as to axially block the root (80) of a vane (40) mounted in said slot (31) of the disc (30),
the axial retention means including an annular upstream clamp (97) fixed on the one hand to the disc (30) and holding on the other hand the upstream lamellae (101, 102) of the first series and of the second series against the disc (30).

4. The rotor (20) of a turbine (1) according to the preceding claim, **characterised in that** the platform (60) of each vane (40) includes a main wall having an upstream rim (61), each upstream lamella (101, 102) of the first series and of the second series bearing radially against at least one inner face of an upstream rim (61).

5. The rotor (20) of a turbine (1) according to any of the preceding claims, **characterised in that** the first series and the second series of lamellae (101, 102, 103, 104) include downstream lamellae (103, 104) mounted downstream of the disc (30), the downstream lamellae (103, 104) of the first series and of the second series being axially superimposed and arranged such that:
- at least two circumferentially adjacent downstream lamellae (103) of the first series are axially superimposed on a downstream lamella (104) of the second series and,
- each downstream lamella (103, 104) of the first and second series is disposed facing a slot (31) of the disc (30) so as to axially block the root (80) of a vane (40) mounted in said slot (31) of the disc (30).

6. The rotor (20) of a turbine (1) according to the preceding claim, **characterised in that** the axial retention means include radially inner holding means and radially outer holding means configured to hold axially and radially the downstream lamellae (103, 104) of the first and second series facing the slots (31) of the disc (30).

7. The rotor (20) of a turbine (1) according to the preceding claim, **characterised in that** the radially inner holding means are formed by radial hooks (33) of the disc (30), each radial hook (33) extending radially from a downstream face of a tooth (32) of the disc (30) and being configured to receive a circumferential end of a radially outer portion (103-1, 104-1) of a downstream lamella (103, 104).

8. The rotor (20) of a turbine (1) according to any of claims 6 to 7, **characterised in that** the radially outer holding means are formed by radial grooves (62-2) formed in the platforms (60) of the vanes (40), each radial groove (62-2) being provided in an inner face of a downstream rim (62) of a platform (60) and being configured to receive the radially outer portion (103-1, 104-1) of a downstream lamella (103, 104).

9. The rotor (20) of a turbine (1) according to any of the preceding claims, **characterised in that** the vanes (40) and the lamellae (101, 102, 103, 104) are made of different materials.

10. The rotor (20) of a turbine (1) according to preceding claim, **characterised in that** the vanes (40) are made from a ceramic matrix material and the lamellae (101, 102, 103, 104) are made from a metal material.

11. A method for mounting the rotor (20) of a turbine (1) according to any of the preceding claims, **characterised in that** it includes the following steps:
- Inserting the roots (80) of the vanes (40) into the slots (31) of the disc (30),
- Positioning the first series and the second series of lamellae (101, 102, 103, 104) so that at least two circumferentially adjacent lamellae (101, 103) of the first series are axially superimposed on a lamella (102, 104) of the second series and that each lamella (101, 102, 103, 104) of the first and second series is disposed facing a slot (31) of the disc (30) so as to axially block the root (80) of a vane (40) mounted in said slot (31) of the disc (30).
